Europäisches Patentamt

European Patent Office

Office européen des brevets

(19)

(11) Veröffentlichungsnummer: **0 212 557 B1**

(12) **EUROPÄISCHE PATENTSCHRIFT**

(45) Veröffentlichungstag der Patentschrift: **27.12.90**

(21) Anmeldenummer: **86111163.1**

(22) Anmeldetag: **12.08.86**

(51) Int. Cl.⁵: **G 09 F 23/06, B 62 B 5/06**

(54) **Schiebegriffvorrichtung für Einkaufswagen.**

(30) Priorität: **12.08.85 DE 3528898**

(43) Veröffentlichungstag der Anmeldung:
**04.03.87 Patentblatt 87/10**

(45) Bekanntmachung des Hinweises auf die
Patenterteilung:
**27.12.90 Patentblatt 90/52**

(84) Benannte Vertragsstaaten:
**AT BE CH DE FR GB IT LI LU NL SE**

(56) Entgegenhaltungen:
**FR-A-2 501 026
US-A-2 918 741
US-A-3 270 454**

(73) Patentinhaber: **Brüder Siegel GmbH + Co KG
Draht- und Metallwarenfabrik
Hinter der Post 4-8
D-8874 Leipheim (DE)**

(72) Erfinder: **Polidar, Franz
Luisenstrasse 17a
D-8872 Burgau (DE)**
Erfinder: **Siegel, Franz
Schlosshaldenring 54
D-8874 Leipheim (DE)**

(74) Vertreter: **Dorner, Jörg, Dr.-Ing. et al
Dorner & Hufnagel Patentanwälte Ortnitstrasse
20
D-8000 München 81 (DE)**

Courier Press, Leamington Spa, England.

**Beschreibung**

Die Erfindung betrifft eine Schiebegriffvorrichtung für Einkaufswagen, die einen auf einem Fahrgestell montierten Warenkorb sowie von diesem wegragende Griffbefestigungsarme enthalten, mit einem hohlen, im Querschnitt die Gestalt eines nach aufwärts bogenförmig gewölbten Ovals oder die Gestalt einer Ellipse oder eines Rechtecks mit abgerundeten Ecken aufweisenden Griffkörper, innerhalb dessen ein sich zwischen den Griffbefestigungsarmen erstreckender und an diesen befestigbarer Verbindungsanker und, unter einer transparenten oberen Abdeckwand des Griffkörpers, ein langgestreckter Werbeflächenträger angeordnet sind.

Eine solche Schiebegriffvorrichtung ist aus der deutschen Gebrauchsmusterschrift 85 02 781 bekannt.

Gemäß einer Ausführungsform dieser bekannten Schiebegriffvorrichtung besteht der Griffkörper aus einer unteren Griffkörperschale und einer damit durch Schrauben verbundenen oberen, transparenten Griffkörperschale, wobei diese Griffkörperschalen vorzugsweise aus Kunststoff gefertigt sind und einen Hohlraum umschließen, innherhalb dessen ein stabförmiger Verbindungsanker aus Metall läuft.

Es zeigt sich, daß im Gebrauch der Griffkörper aus Kunststoff durch die auf ihn aufgebrachten Schiebekräfte und Belastungskräfte verformt wird und sich relativ zu dem Verbindungsanker aufgrund dieser Verformung verlagert, so daß es vorkommen kann, daß der innerhalb des Griffkörpers befindliche, langgestreckte Werbeflächenträger sich verschiebt, aus seinen Führungsnuten herausgedrückt wird oder aufgescheuert wird. Außerdem ist bei der vorgenannten bekannten Konstruktion das Auswechseln des Werbeflächenträgers verhältnismäßig zeitraubend, da die Schrauben zur Verbindung der oberen Griffkörperschale und der unteren Griffkörperschale zunächst gelöst werden müssen, um den Griffkörperhohlraum, in dem sich der Werbeflächenträger befindet, zugänglich zu machen.

Aus der US-Patentschrift 3 270 454 ist es bei Schiebegriffvorrichtungen der vorliegend betrachteten allgemeinen Art ferner bekannt, daß der innherhalb des Griffkörpers angeordnete Verbindungsanker die Gestalt eines Metall-Stützprofiles hat, welches Stützflächen zur Abstützung der Innenwand des Griffkörperteiles aufweist.

Bei dieser bekannten Schiebegriffkonstruktion hat das Griffkörperteil die Gestalt eines Rohres mit von dessen Innenwand nach einwärts ragenden Profilrippen, die sich an den ebenen Außenflächen eines im Querschnitt etwa quadratischen Metallrohres, das das Stützprofil bildet, abstützen. Der langgestreckte Werbeflächenträger der bekannten Schiebegriffvorrichtung befindet sich unter einer transparenten Abdeckwand des Griffkörpers auf dessen dem Kunden oder Benutzer zugewandten Seite.

Durch die Erfindung soll die Aufgabe gelöst werden, eine Schiebegriffvorrichtung der eingangs beschriebenen Art so auszugestalten, daß eine Durchbiegung des Griffkörpers unter den Belastungskräften bei der Benutzung des Einkaufswagens und eine Beschädigung oder Verformung des Werbeflächenträgers vermieden werden. Vorzugsweise soll auch die Möglichkeit gegeben sein, den Werbeflächenträger kurzfristig und mit wenigen Handgriffen auszuwechseln.

Diese Aufgabe wird erfindungsgemäß dadurch gelöst, daß der innherhalb des Griffkörpers angeordnete Verbindungsanker die Gestalt eines Metall-Stützprofiles hat, welches Stützflächen zur Abstützung der Innenwand eines unteren Griffkörperteiles aufweist, und welches mit einem unteren Teil seiner Außenfläche der Form der Innenfläche der unteren Griffkörperschale angepaßt ist.

Eine obere Griffkörperschale, welche die transparente Abdeckung für den streifenförmigen Werbeflächenträger bilden kann, ist an einander gegenüberstehenden, längslaufenden Randkanten der unteren Griffkörperschale eingerastet und trägt nach einwärts weisende Stege, welche sich an weiteren Stützflächen des Metall-Stützprofiles abzustützen vermögen, so daß die obere Griffkörperschale unter den Belastungskräften nicht in solcher Weise verformt werden kann, daß sie aus ihrer Verrasungsstellung zwischen den Randkanten der unteren Griffkörperschale herasugedrückt wird.

Obwohl die untere und die obere Griffkörperschale aus Kunststoff gefertigt und vergleichsweise dünnwandig ausgeführt sind, nehmen die aneinander zu verrastenden Flächen bzw. Randkanten der Griffkörperschalen eine präzise Stellung ein, welche durch die Verbindung der unteren Griffkörperschale mit dem Metall-Stützprofil gewährleistet ist, so daß eine präzise Verrastung über die gesamte Grifflänge erreicht wird und auf die Verbindung de Griffkörperschalen durch Schrauben verzichtet werden kann. Aufgrund dieser Ausbildung ergibt sich eine rasche Auswechselbarkeit des Werbeflächenträgers.

Gemäß einer weiteren vorteilhaften Bauart der hier angegebenen Schiebegriffvorrichtung hat der hohle Griffkörper die Gestalt einer elastischen, auf der Unterseite längsgeteilten, mindestens bereichsweise transparenten Schale, die auf das Metall-Stützprofil, das insbesondere im Querschnitt nach aufwärts bogenförmig gewölbt oval ausgebildet ist, aufgeschoben oder aufgeklipst ist, wobei die elastische Schale unter Vorspannung auf das Metall-Stützprofil aufgeschoben oder aufgeklipst sein kann oder aber längs der an die Teilfuge angrenzenden Ränder mit Rastprofilleisten versehen ist, die aneinander und/oder an entsprechenden Rastnuten des Metall-Stützprofils eingerastet sind oder eingreifen. Der langgestreckte Werbeflächenträger läßt sich auch bei dieser Ausführungsform mit wenigen Handgriffen auswechseln und neigt insbesondere aufgrund der Querschnittsgestaltung des Metall-Stützprofils nicht zum Verrutschen oder Verlagern.

Im übrigen sind vorteilhafte Ausgestaltungen und Weiterbildungen der vorliegend angegebenen Schiebegriffvorrichtung Gegenstand der anliegenden, dem Anspruch 1 nachgeordneten Ansprüche, deren Inhalt hierdurch ausdrücklich zum Bestandteil der Beschreibung gemacht wird, ohne an dieser Stelle den Wortlaut zu wiederholen.

Nachfolgend wird eine Reihe von Ausführungsbeispielen anhand der Zeichnung beschrieben. Es zeigen:

Fig. 1 eine perspektivische, teilweise im Schnitt gezeichnete Ansicht einer Schiebegriffvorrichtung der hier angegebenen Art,

Fig. 2 eine Seitenansicht einer auf einen Griffbefestigungsarm aufgeschobenen Griffhalteschale, und

Figuren 3a bis 3e Querschnittsdarstellungen weiterer zweckmäßiger Ausführungsformen der hier angegebenen Schiebegriffvorrichtung mit einer elastischen, auf der unteren Seite längsgeteilten, mindestens bereichsweise transparenten Griffkörperschale.

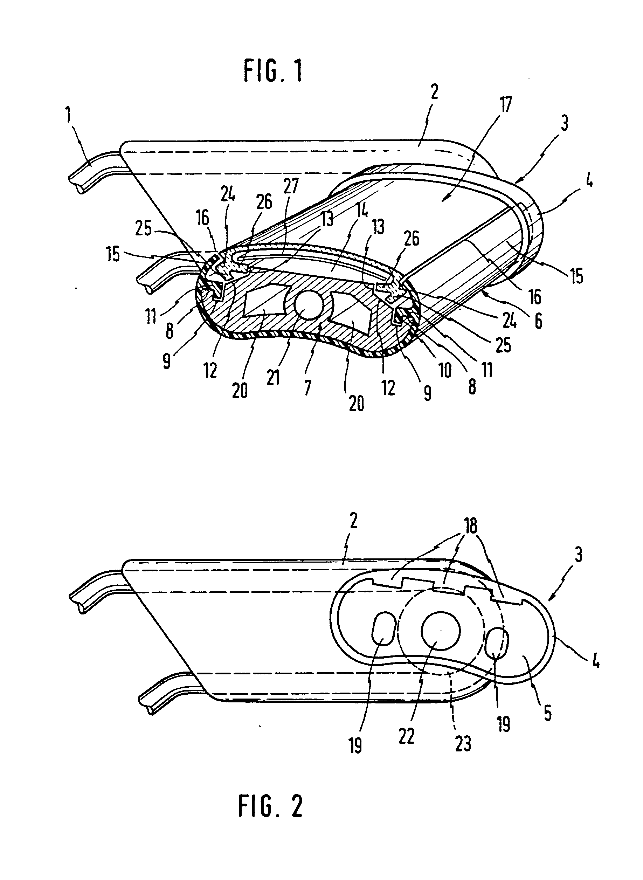

In Figur 1 ist das obere Ende eines vom Warenkorb wegragenden, schlaufenförmigen Griffbefestigungsarmes 1 gezeigt. In allgemein bekannter Weise ragen von dem Warenkorb an dessen Rückseite 2 derartige Griffbefestigungsarme weg, zwischen denen über Griffhalteschalen ein Griffkörper befestigt ist. Eine auf den Griffbefestigungsarm 1 aufgeschobene Griffhalteschale ist in Figur 1 mit 2 bezeichnet und in ihrer Ausbildung in der Darstellung von Figur 2 im einzelnen erkennbar.

Die Griffhalteschalen 2 besitzen auf den einander zugekehrten Seiten einstückig angeformte, sich zur Seite öffnende Haltekappen 3, deren von einem Rand 4 umgebener Innenraum 5 in der Seitenansicht im wesentlichen die Gestalt eines nach aufwärts verformten Ovals hat und so ausgebildet ist, daß in ihn jeweils ein Ende einer aus Kunststoff gefertigten unteren Griffkörperschale 6 und eines darin angeordneten Metall-Stützprofils 7 eingeschoben werden kann, wie dies in Figure 1 angedeutet ist.

Das Metall-Stützprofil 7 weist auf seiner Unterseite einen Verlauf der Oberfläche auf, der der Innenfläche der unteren Griffkörperschale 6 in diesem Bereich angepaßt ist, so daß das Metall-Stützprofil 7 für die vergleichsweise dünnwandige untere Griffkörperschale 6 eine Stützfläche bildet. An die Stützfläche des Metall-Stützprofiles 7 anschließend springt das Profil, wie bei 8 angedeutet, nach einwärts und ist auf beiden Seiten mit längslaufenden, sich nach oben öffnenden Nuten 9 versehen, in welchen Hakenprofilansätze 10 von Verankerungsflanschen 11 der unteren Griffkörperschale 6 Aufnahme finden.

An den mit den Nuten 9 versehenen Bereich des Metall-Stützprofiles 7 schließen sich auf beiden Seiten schräg verlaufende Profilschultern 12 an, auf deren Bedeutung weiter unten noch eingegangen wird. Die Profilschultern 12 werden in Richtung nach einwärts durch Profilabsätze 13 begrenzt zwischen denen sich ein Plateau 14 befindet.

Von den Verankerungsflanschen 11 aus ragen Ränder 15 der unteren Griffkörperschale 6 nach aufwärts und nach einwärts und enden an einander gegenüberstehenden, längslaufenden Randkanten 16. An diesen Randkanten ist eine aus transparentem Kunststoff gefertigte, langgestreckt streifenförmige, nache aufwärts gewölbte obere Griffkörperschale 17 eingerastet. Während das Metall-Stützprofil 7 und die dieses umgebende untere Griffkörperschale 6 mit ihren Enden in die Ausnehmung 5 der Haltekappen 3 der Griffhalteschalen 2 eingeschoben sind, ist die Länge der oberen Griffkörperschale 7 so bemessen, daß ihre Enden im wesentlichen in der Ebene der seitlichen Begrenzung des Randes 4 der Haltekappen 3 liegen, derart, daß die obere Griffkörperschale 17 nach Lösen der Verrastung mit der unteren Griffkörperschale 6 aus ihrer Lage zwischen den Griffhalteschalen 2 herausgenommen werden kann, ohne daß die gesamte Schiebegriffvorrichtung demontiert zu werden braucht. Die Enden der oberen Griffkörperschale 17 stützen sich gegen in den Innenraum 5 der Haltekappen 3 hineinragende Ansätze 18 der Griffhalteschalen 2 ab.

In den Innenraum 5 der Haltekappen 3 ragen ferner Vorsprünge 19 hinein, welche in längslaufende Profilhohlräume 20 des Metall-Stützprofiles 7 eingreifen, wenn dieses zusammen mit der unteren Griffkörperschale 6 in die Haltekappen 3 der Griffhalteschalen 2 eingeschoben ist. Schließlich ist das Metall-Stützprofil 7 mit einer mittigen, längslaufenden Bohrung 21 versehen, die an den Enden jeweils ein Gewinde aufweist, so daß der Griffkörper mit dem Metall-Stützprofil durch eine Schraube, welche durch Bohrungen 22 und 23 der Griffhalteschalen 2 reicht, mit diesen und mit den Griffbefestigungsarmen verbunden und zusammengespannt werden kann.

Die transparente obere Griffkörperschale 17 weist seitliche, längslaufende, mit den Randkanten 16 der unteren Griffkörperschale 6 verrastbare Kerben 24 sowie jeweils nahe der Kerben nach abwärts und nach einwärts tragende Stütz-Profilstege 25 und 26. Die nach abwärts ragenden Stützstege 25 sind dazu bestimmt, eine Verformung der oberen Griffkörperschale und insbesondere deren mit den Randkanten 16 verrastbaren Teile durch Anlaufen gegen die Profilschultern 20 des Metall-Stützprofiles 7 zu begrenzen. Eine entsprechende Funktion erfüllen die nach einwärts ragenden Stützstege 26 durch Anlaufen gegen die Profilabsätze 13. Außerdem bilden die nach einwärts ragenden Stützstege 26 mit der aufwärts gewölbten Wand der oberen Griffkörperschale 17 sich aufeinander zu öffnende Nuten, in welche die Ränder eines streifenförmigen Werbeflächenträgers 27 eingeschoben sind. Eine Verschiebung des Werbeflächenträgers 27 in den Innenraum 5 der Haltekappen 3 der Griffhalteschalen 2 hinein wird durch den mittleren der zuvor erwähnten Ansätze 18 verhindert. Der Werbeaufdruck des Werbeflächenträgers 27 ist durch die transparente Wand der oberen Griffkörperschale 17 hindurch sichtbar.

An bestimmter Stelle kann in dem metall-Stützprofil 7 und in der unteren Griffkörperschale 6 eine von unten bis unter die obere Griffkörperschale 17 reichende Bohrung vorgesehen sein, um mittels eines Werkzeuges die obere Griffkörperschale 17 zusammen mit dem Werbeflächenträger 27 aus der Verrastungsstellung mit der unteren Griffkörperschale hochdrücken zu können, damit der Werbeflächenträger ausge-wechselt werden kann. Diesbezügliche Einzelhei-ten sind in der Zeichnung zu Vereinfachung der Darstellung weggelassen.

Während bei dem gezeigten, bevorzugten Ausführungsbeispiel der Griffkörper im Querschnitt die Gestalt eines nach aufwärts bogenförmig verformten Ovals hat, kann der Griffkörper gemäß anderen Ausführungsformen auch im Querschnitt elliptisch oder rechteckig mit abgerundeten Ecken oder in bestimmten Fällen auch rund ausgebildet sein.

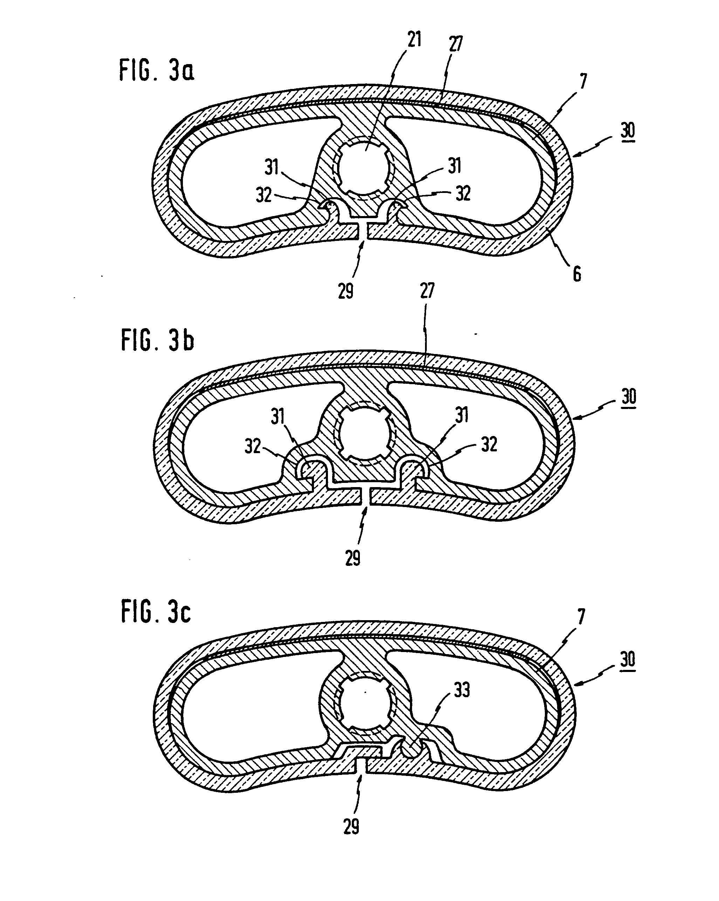

Den Ausführungsformen nach den Querschnittsdarstellungen von Figur 3a bis Figur 3e ist gemeinsam, daß der Gehäusekörper die Gestalt einer elastischen, auf de Unterseite durch eine Längsfuge 29 geteilten Schale 30 hat, welche das Metall-Stützprofil 7 im wesentlichen allseitig umgibt und den auf der Oberseite des Metall-Stützprofils 7 aufliegenden, langgestreckten Werbeflächenträger 27 überdeckt. Um den Werbeflächenträger 27 sichtbar zu machen, ist die elastische, hülsenförmige Schale 30 mindestens auf ihrer Oberseite aus transparentem Werkstoff, vor-zugsweise aus transparentem Kunststoff, gefer-tigt.

Aufgrund der bevorzugten Querschnittsgestalt des Metall-Stützprofiles 7 der Ausfürhungsformen nach den Figuren 3a bis 3e als aufwärts bogenförmig verformtes Oval ist der Werbeflächenträger 27 gegen Verlagerung gesichert zwischen dem Metall-Stützprofil und der auf ihn aufgeklipsten elastischen Griffkörperschale 30 gehalten.

Bei der Ausführungsform nach Figur 3a befinden sich nahe den an die längslaufende Teilfuge 29 angrenzenden Rändern der elastischen Griffkörperschale 30 nach innen weisende Rastprofilleisten 31, welche in entsprechend geformte Rastnuten 32 des Metall-Stützprofils 7 einrastbar sind. Dabei erleichtert die Teilfuge 29 die Einrastfunktion und gewährleistet eine begrenzte Beweglichkeit der Rastprofilleisten 31 zur Verwirklichung der Rastfunktion. Außerdem ermöglicht die längslaufende Teilfuge 29 nicht nur ein rasches Auseinandernehmen und Zusammensetzen von Metall-Stützprofil und Gehäusekörperschale sondern bewirkt auch einen Ausgleich von Herstellungstoleranzen.

Bei der Ausführungsform nach Figur 3b haben die Rastprofilleisten einen hakenföromigen Querschnitt und greifen in entsprechende Hinterschneidungen der Rastnuten 32 ein.

Bei der Ausführungsform nach Figur 3c ist an der elastischen Griffkörperschale 30 innenseitig nahe dem an die Teilfuge 29 angrenzenden Rand auf einer Seite eine Profilnut angeformt, während sich in einer Profilausnehmung des Metall-Stützprofiles 7 ein Rastprofilwulst 33 befindet, welcher mit der Profilnut der Griffkörperschale zusammenwirkt. Außerdem greift ein Profilflansch dieses Randes der Griffkörperschale über einen abgesetzten Profilschenkel des jeweils gegenüberliegenden Randes der Griffkörperschale, um die beiden Ränder der Griffkörperschale in Anlage aneinander und an dem Metall-Stützprofil 7 zu halten.

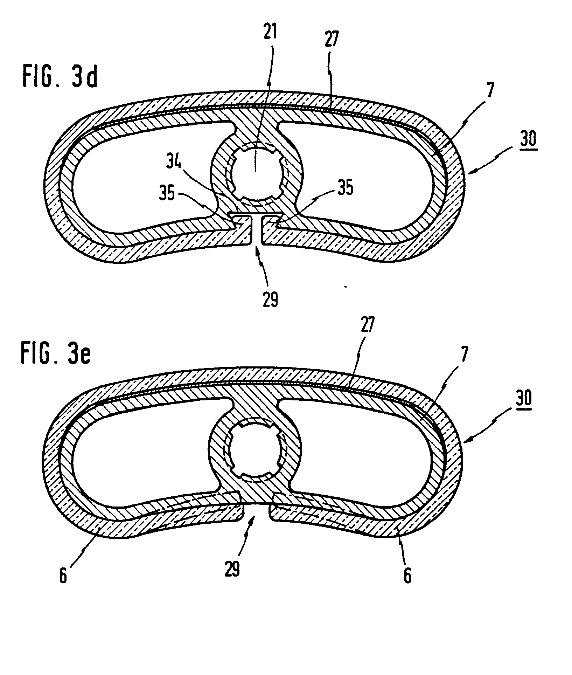

Das Metall-Stützprofil 7 der Ausführungsform nach Figur 3d besitzt auf der Unterseite eine einzige Schwalbenschwanznut 34 ausreichender Breite, um jeweils nach innen weisende Hakenprofilleisten 35 der an die Teilfuge 29 angrenzenden Ränder der Griffkörperschale 30 in die Schwalbenschwanznut des Metall-Stützprofiles einrasten lassen zu können.

Schließlich sind die an die Teilfuge 29 angrenzenden unteren Griffkörperteile 6 der elastischen Griffkörperschale 30 zunächst nach einwärts vorgespannt, wie in Figur 3e durch strichpunktierte Linien angedeutet ist, so daß nach dem Aufschieben und Aufklipsen der Griffkörperschale 30 auf das Metall-Stützprofil 7 die unteren Griffkörperteile 6 in fester Anlage an die unteren Stützflächen des Metall-Stützprofiles 7 gehalten werden.

## Patenansprüche

1. Schiebegriffvorrichtung für Einkaufswagen, die einen auf einem Fahrgestell montierten Warenkorb sowie von diesem wegragende Griffbefestigungsarme (1) enthalten, mit einem hohlen, im Querschnitt die Gestalt eines nach aufwärts bogenförmig gewölbten Ovals oder die Gestalt einer Ellipse oder eines Rechtecks mit abgerundeten Ecken aufweisenden Griffkörper (6, 17 bzw. 30), innerhalb dessen ein sich zwischen den Griffbefestigungsarmen (1) erstreckender und an diesen befestigbarer Verbindungsanker (7) und, unter einer transparenten oberen Abdeckwand des Griffkörpers, eine langgestreckter Werbeflächenträger (27) angeordnet sind, dadurch gekennzeichnet, daß der Verbindungsanker (7) die Gestalt eines Metall-Stützprofiles hat, welches Stützflächen zur Abstützung der Innenwand eines unteren Griffkörperteils (6) aufweist, wobei der untere Teil der Außenfläche des Metall-Stützprofiles (7) in seinem Verlauf der Form der Innenfläche des unteren Griffkörperteils (6) angepaßt ist.

2. Schiebegriffvorrichtung nach Anspruch 1 mit zweiteilig ausgebildetem Griffkörper, dadurch gekennzeichnet, daß das obere Griffkörperteil (17) als eine sich über die gesamte Länge des Griff-körpers erstreckende Griffkörperschale ausgebil-det ist, die mit längslaufenden Randkanten (16) des als untere Griffkörperschale (6) ausgebildeten unteren Griffkörperteils verrastbar ist.

3. Schiebegriffvorrichtung nach Anspruch 2, dadurch gekennzeichnet, daß das Metall-Stützprofil mit Verankerungsnuten (9) versehen ist, in welche Hakenprofilansätze (10) von Verankerungsflanschen (11) der unteren Griffkörperschale (6) eingreifen, wobei die Verankerungsflanschen (11) nahe den Randkanten (16) von der Wand der unteren Griffkörperschale (6) nach einwärts ragen.

4. Schiebegriffvorrichtung nach einem der Ansprüche 1 bis 3, dadurch gekennzeichnet, daß von dem oberen Griffkörperteil bzw. der oberen Griffkörperschale (17) nahe deren Ränder Stützstege (25, 26) in Richtung auf gegenüberliegende Stützflächen (12, 13) des Metall-Stützprofils (7) nach einwärts ragen.

5. Schiebegriffvorrichtung nach einem der Ansprüche 1 bis 4, dadurch gekennzeichnet, daß an dem oberen Griffkörperteil bzw. der oberen Griffkörperschale (17) Nuten zum Einschieben der Ränder es langgestreckten streifenförmigen Werbeflächenträgers (27) vorgesehen sind.

6. Schiebegriffvorrichtung nach einem der Ansprüche 1 bis 5, dadurch gekennzeichnet, daß der untere Griffkörperteil (6) und das Metall-Stützprofil (7) an den Enden in Griffhalteschalen (2) eingesteckt sind, welche dazu bestimmt sind, auf die Griffbefestigungsarme (1) bildende Griffhalteschlaufen des Warenkorbes des Einkaufswagens aufgeschoben und mit ihnen verschraubt zu werden.

7. Schiebegriffvorrichtung nach Anspruch 1, dadurch gekennzeichnet, daß der hohle Griffkörper (30) die Gestalt einer elastischen, auf der Unterseite längsgeteilten, mindestens berechsweise transparenten Schale hat, die auf das Metall-Stützprofil (7) aufgeschoben oder aufgeklipst ist.

8. Schiebegriffvorrichtung nach Anspruch 7, dadurch gekennzeichnet, daß die elastische Schale (30) unter Vorspannung auf das Metall-Stützprofil (7) aufgeschoben oder aufgeklipst ist.

9. Schiebegriffvorrichtung nach Anspruch 8, dadurch gekennzeichnet, daß die an die Teilfuge angrenzenden Ränder der elastischen Schale (30) mit Rastvorsprüngen oder Rastprofilleisten versehen sind, die aneinander und/oder an entsprechenden Rastnuten des Metall-Stützprofils eingerastet sind oder eingreifen.

**Revendications**

1. Dispositif manche de commande pour les caddies comprenants un panier à provisions monté sur un chariot ainsi que des bras (1) d'attache du manche qui s'en étenden en saillie, le dispositif comprenant un corps de manche (6, 17 ou 30, respectivement) à section sous forme d'un ovale en voûte vers le haut ou sous forme d'une ellipse ou d'un rectangle aux angles arrondis, au dedans duquel sont pourvu un bras de liaison (7) s'étendant entre lesdits bras d'attache du manche (1) pour s'y relier, ainsi qu'un support panneau-réclame allongé (27) au-dessous d'une paroi transparente de recouvrement supérieure, caractérisé en ce que ledit bras de liaison (7) présente la configuration d'un profilé de support métallique comprenant des surfaces d'appui pour la paroi intérieure d'un élément inférieur (6) dudit corps de manche, le tracé de la partie inférieure de la surface extérieure dudit profilé de support métallique (7) s'adaptant au galbe de la surface intérieure dudit élément inférieur (6) du corps de manche.

2. Dispositif manche de commande selon la Revendication 1, à corps de manche en deux parties, caractérisé en ce que ledit élément supérieur (17) du corps de manche est configuré en tant qu'une coque de corps de manche qui s'étend sur toute la longueur de corps de manche et qui est pourvue pour l'enclenchement par des bords marginaux longitudinaux (16) de l'élément inférieur dudit corps de manche configuré en tant que coque inférieure (6) du corps de manche.

3. Dispositif manche de commande selon la Revendication 2, caractérisé en ce que ledit profilé de support métallique est pourvu des rainures d'ancrage (9) dans lesquelles s'engagent des saillies profilées à crochet (10) des collets d'ancrage (11) de ladite coque inférieure du corps de manche (6), lesdits collets d'ancrage (11) faisant saillie de la paroi de la coque inférieure dudit corps de manche (6) vers l'intérieur au voisinage desdists bords marginaux (16).

4. Dispositif manche de commande selon quelconque des Revendications 1 à 3, caractérisé en ce que des entretoises de support (25, 26) s'étendent en saillie de l'élément supérieur du corps de manche ou de la coque supérieure du corps de manche (17), au voisinage de leurs bords, vers l'intérieur en direction vers des surfaces de support (12, 13) opposées dudit profilé de support métallique (7).

5. Dispositif manche de commande selon quelconque des Revendications 1 à 4, caractérisé en ce que des rainures sont pourvues audit élément supérieur du corps de manche ou de ladite coque supérieure du corps de manche (17), pour y introduire les bords dudit support panneau-réclame allongé (27).

6. Dispositif manche de commande selon quelconque des Revendications 1 à 5, caractérisé en ce que ledit élément inférieur (6) dudit corps de manche et ledit profilé de support mètallique (7) sont emmanchés aux extrémités dans des coques (2) de retenue du manche (2) qui sont pourvues à être enfilées sur des étriers de retenue du manche du panier à provisions du caddie, qui constituent lesdits bras d'attache du manche, pour s'y fixer par vissage.

7. Dispositif manche de commande selon la Revendication 1, caractérisé en ce que ledit corps du manche creux (30) présente la configuration d'une coque élastique transparente au moins en certains portions, dont la surface inférieure est coupée longitudinalement et qui est emmanchée ou fixée par clip sur ledit profilé de support métallique (7).

8. Dispositif manche de commande selon la Revendication 7, caractérisé en ce que ladite coque élastique (30) est emmanchée ou fixée par clip à précontrainte sur ledit profilé de support métallique (7).

9. Dispositif manche de commande selon la Revendication 8, caractérisé en ce que les bords de ladite coque élastique (30) qui sont contigus au joint de coupe sont pourvus des parties en saillie d'encliquetage ou des rebords profilés d'encliquetage, qui s'encliquent ou s'engagent l'un à l'autre et/ou aux rainures d'encliquetage appropriées dudit profilé de support métallique.

**Claims**

1. A push handle device for shopping trolleys, which comprise a merchandise basket that is mounted on a chassis, and handle-fixing arms (1) protruding from said basket, which device comprises a hollow handle body (6, 17 or 30), which has in cross-section the shape of an arcuately upwardly curved oval or of an ellipse or of a rectangle having rounded corners, a connecting anchor (7), which extends in said handle body between the handle-fixing arms (1) and is fixed to the handle-fixing arms, and an advertising surface carrier (27), which is disposed in the handle body under a transparent top cover wall of the handle body, characterized in that the connecting anchor (7) has the shape of a metal supporting bar, which has supporting surfaces for supporting the inside surface of a lower portion (6) of the handle body, and the configuration of the bottom portion of the outside surface of the metal supporting bar (7) conforms to the inside surface of the bottom portion (6) of the handle body.

2. A push handle device according to claim 1 comprising a bipartite handle body, characterized in that the upper portion (17) of the handle body, consists of a handle body shell segment, which extends throughout the length of the handle body and is adapted to be releasably interlocked with longitudinally extending edges (16) of the lower portion of the handle body, which lower portion consists of a lower shell segment (6) of the handle body.

3. A push handle device according to claim 2, characterized in that the metal supporting bar is provided with anchoring grooves (9), which receive hook-shaped extensions (10) of anchoring flanges (11) of the lower shell segment (6) of the handle body, and the anchoring flanges protrude inwardly from the wall of the lower shell segment (6) of the handle body close to the edges (16).

4. A push handle device according to any of claims 1 to 3, characterized in that supporting webs (25, 26) protrude inwardly toward opposite supporting surfaces (12, 13) of the metal supporting bar (7) from the upper portion of the handle body or the upper shell segment (17) of the handle body close to the edges thereof.

5. A push handle device according to any of claims 1 to 4, characterized in that grooves for slidably receiving the edges of the elongate strip-shaped advertizing surface carrier (27) are provided on the upper portion of the handle body or the upper shell segment (17) of the handle body.

6. A push handle device according to any of claims 1 to 5, characterized in that the lower portion (6) of the handle body and the metal supporting bar (7) are fitted at their ends in handle-holding shell segments (2), which are intended to be slidably fitted on handle-holding loops of the merchandise basket of the shopping trolley, which loops constitute the handle-fixing arms (1), and said handle-holding shell segments are intended to be screw-connected to said loops.

7. A push handle device according to claim 1, characterized in that the hollow handle body (30) has the shape of an elastic shell segment, which is longitudinally divided on its underside and is transparent at least in portions thereof and has slidably been fitted or clipped to the metal supporting bar (7).

8. A push handle device according to claim 7, characterized in that the elastic shell segment (30) has slidably been fitted or clipped onto the metal supporting bar (7) and is under an initial stress.

9. A push handle device according to claim 8, characterized in that those edges of the elastic shell segment (30) which adjoin the parting line are provided with detent projections or with detent bars, which releasably interlock with each other or with corresponding detent grooves of the metal supporting bar or are releasably received thereby.

FIG. 1

FIG. 2

FIG. 3a

FIG. 3b

FIG. 3c

FIG. 3d

FIG. 3e